# EUROPEAN PATENT APPLICATION

(11) **EP 1 154 293 A2**
(43) Date of publication of application: **14.11.2001**
(21) Application number: 01304084.5
(22) Date of filing: 04.05.2001
(51) Int. Cl.: G02B 6/125

(54) **Optical waveguide type directional coupler and optical waveguide circuit using the same**

(30) Priority: 12.05.2000 JP 2000139838
(71) Applicant: The Furukawa Electric Co., Ltd., Tokyo 100-8322 (JP)
(72) Inventor: Kawashima, Hiroshi, The Furukawa Electric Co. Ltd., Tokyo 100-8322 (JP); Koshi, Hiroyuki, The Furukawa Electric Co. Ltd., Tokyo 100-8322 (JP)
(74) Representative: Dealtry, Brian

(57) **Abstract**

In one viewpoint, the invention is to provide an optical waveguide type directional coupler capable of reducing the wavelength dependency, the polarization dependency and variations in the coupling efficiency and to provide a small optical waveguide circuit using the same. An optical coupling part is provided in which a first optical waveguide and a second optical waveguide are arranged side by side to come close each other at the middle part in the longitudinal direction of the optical waveguides. At least one of the incident side of the first optical waveguide and the incident side of the second optical waveguide is adapted to be a light input part to the optical coupling part. At least one of the outgoing side of the first optical waveguide and the outgoing side of the second optical waveguide is adapted to be a light output part. The first and second optical waveguides in the optical coupling part are formed to be curved waveguide parts that project to the other optical waveguide side. A distance P' between peaks in a field distribution of a propagation light propagating from one side of the first and second optical waveguides to the other side thereof through the optical coupling part is made narrower than a distance P between core centers of the first and second optical waveguides in the optical coupling part.

## Description

### FIELD OF THE INVENTION

The present invention relates to an optical waveguide type directional coupler for use in optical communications and an optical waveguide circuit using the same.

### BACKGROUND OF THE INVENTION

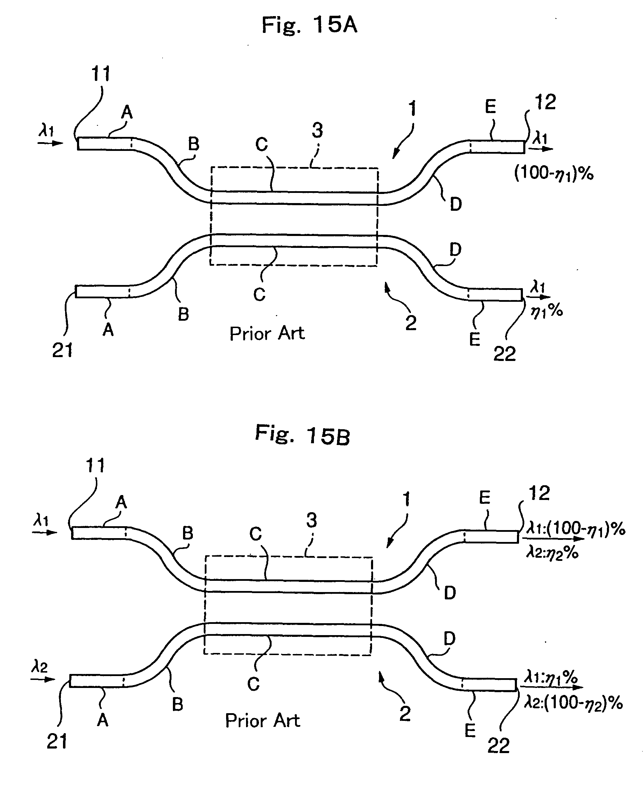

In the field of optical communications, as shown in Figs. 15A and 15B, for example, an optical waveguide type directional coupler is widely used in which a first optical waveguide 1 and a second optical waveguide 2 are arranged side by side to come close to each other in parallel at a midpoint part (a center part in Figs. 15A and 15B) in the longitudinal direction of the first and second optical waveguides 1 and 2 for forming an optical coupling part 3.

In the optical waveguide type directional coupler, at least one of an incident side 11 of the first optical waveguide 1 and an incident side 21 of the second optical waveguide 2 is adapted to be a light input part to the optical coupling part 3. Additionally, at least one of an outgoing side 12 of the first optical waveguide 1 and an outgoing side 22 of the second optical waveguide 2 is adapted to be a light output part from the optical coupling part 3. This kind of optical waveguide type directional coupler is generally used as a one-by-two optical coupler or a two-by-two optical coupler.

That is, when the optical waveguide type directional coupler is used as a one-by-two optical coupler, as shown in Fig 15A, the incident side 11 of the first optical waveguide 1 is adapted to be the light input part to the optical coupling part 3 and both the outgoing side 12 of the first optical waveguide 1 and the outgoing side 22 of the second optical waveguide 2 are adapted to be the light output part from the optical coupling part 3. When adapted in this manner, in the case that the coupling efficiency of the directional coupler in a wavelength λ₁ is set η₁ (%), for example, a light having the wavelength λ₁ that has been entered from the first optical waveguide 1 is emitted from the outgoing side 12 of the first optical waveguide 1 and the outgoing side 22 of the optical waveguide 2 at a ratio of (100-η₁) to η₁.

Furthermore, when optical waveguide type directional coupler is used as a two-by-two optical coupler, as shown in Fig. 15B, both the incident side 11 of the first optical waveguide 1 and the incident side 21 of the first optical waveguide 2 are adapted to be the light input part to the optical coupling part 3 and both the outgoing side 12 of the first optical waveguide 1 and the outgoing side 22 of the second optical waveguide 2 are adapted to be the light output part from the optical coupling part 3. When adapted in this manner, for example, the light having the wavelength λ₁ and a light having a wavelength λ₂ that have been entered from the respective first and second optical waveguides 1 and 2 are emitted from the outgoing side 12 of the first optical waveguide 1 and the outgoing side 22 of the optical waveguide 2 at a partition ratio corresponding to the coupling efficiency in each of the wavelengths λ₁ and λ₂.

That is, assuming that the coupling efficiency of the light having the wavelength λ₁ is η₁ and the coupling efficiency of the light having the wavelength λ₂ is η₂, the light having the wavelength λ₁ is emitted (100 - η₁)% out thereof and the light having wavelength λ₂ is emitted η₂% out thereof from the outgoing side 12 of the first optical waveguide 1. Additionally, the light having the wavelength λ₁ is emitted η₁% out thereof and the light having the wavelength λ₂ is emitted (100 - η₂) % out thereof from the outgoing side 22 of the second optical waveguide 2.

### SUMMARY OF THE INVENTION

The invention is to provide an optical waveguide type directional coupler and an optical waveguide circuit using the same. The optical waveguide type directional coupler comprises:
having an optical coupling part comprising a first optical waveguide and a second optical waveguide arranged side by side to come close to each other at a midpoint part in the longitudinal direction of the optical waveguides;
adapting at least one of an incident side of the first optical waveguide and an incident side of the second optical waveguide to be a light input part to the optical coupling part; and
adapting at least one of an outgoing side of the first optical waveguide and an outgoing side of the second optical waveguide to be a light output part from the optical coupling part,
wherein in the optical coupling part, a distance between peaks in a field distribution of a propagation light propagating from one side of the first and second optical waveguides to the other side thereof is made narrower than that between core centers of the first and second optical waveguides in the optical coupling part.

### BRIEF DESCRIPTION OF THE DRAWINGS

Exemplary embodiments of the invention will now be described in conjunction with drawings in which:
Fig. 1A depicts a configurational view illustrating one embodiment of the optical waveguide type directional coupler according to the invention;
Fig. 1B depicts an enlarged view illustrating an area near an optical coupling part in Fig 1A;
Fig. 2 depicts a graph illustrating a wavelength dependency of the coupling efficiency in the optical waveguide type directional coupler of the embodiment;
Fig. 3 depicts a graph illustrating variations in the coupling efficiency in the optical waveguide type directional coupler of the embodiment;
Fig. 4 depicts an illustration showing an example in forming a plurality of circuits of the optical waveguide type directional couplers on a wafer;
Fig. 5 depicts a block illustration showing one example of an optical waveguide circuit according to the invention using the optical waveguide type directional couplers of the embodiment;
Fig. 6A depicts a graph illustrating an insertion loss of each of the wavelength lights outputted from the optical waveguide circuit of the embodiment;
Fig. 6B depicts a graph illustrating an insertion loss of each of the wavelength lights outputted from the optical waveguide circuit in the presence of approximately 5% of variations in the coupling efficiency of the optical coupling part;
Fig. 7A depicts an illustration showing an orthodox example of an optical waveguide type directional coupler disclosed in Japanese Patent No. 2804363;
Fig. 7B depicts a partial enlarged view of Fig. 7A;
Fig. 8 depicts a graph illustrating a wavelength dependency of the coupling efficiency in the optical waveguide type directional coupler in Fig. 7A;
Fig. 9 depicts a graph illustrating wavelength dependencies of the coupling efficiency due to the difference in optical waveguide distances of an optical coupling part in the optical waveguide type directional coupler in Fig. 7A;
Fig. 10 depicts a graph illustrating variations in the coupling efficiency in the optical waveguide type directional coupler in Fig. 7A;
Fig. 11 depicts an illustration showing an example of a waveguide configuration of a Mach-Zehnder interferometer type optical waveguide circuit;
Fig. 12 depicts a graph illustrating an insertion loss of each of the wavelength lights outputted from the optical waveguide circuit when the Mach-Zehnder interferometer type optical waveguide circuit formed by using the optical waveguide type directional couplers in Fig. 7A has been fabricated in conformity with design;
Fig. 13A depicts a graph illustrating an insertion loss of each of the wavelength lights outputted from the optical waveguide circuit in the case of approximately 5% of variations in the coupling efficiency of the optical coupling parts of the Mach-Zehnder interferometer type optical waveguide circuit formed by using the optical waveguide type directional couplers in Fig. 7A;
Fig. 13B depicts a graph illustrating an insertion loss of each of the wavelength lights outputted from the optical waveguide circuit in the case of approximately 10% of variations in the coupling efficiency of the optical coupling parts of the Mach-Zehnder interferometer type optical waveguide circuit formed by using the optical waveguide type directional couplers in Fig. 7A;
Fig. 14 depicts an illustration showing an orthodox example of an optical waveguide type directional coupler having a multimode waveguide; and
Figs. 15A and 15B depict illustrations showing a configuration of a typical orthodox optical waveguide type directional coupler.

### DETAILED DESCRIPTION

The first and second optical waveguides 1 and 2 forming an orthodox optical waveguide type directional coupler shown in Figs. 15A and 15B, as illustrated in these drawings, are formed to be linear waveguide parts A, C and E on the both sides thereof and in the optical coupling part 3 and are formed to be curved waveguide parts B and D where the portions thereof are sandwiched by the linear waveguide parts A, C and E.

Generally, a peak position in a field distribution of a propagation light propagating through an optical waveguide corresponds to a core center position in a linear wavegide. However, in a curved waveguide, as the radius of curvature thereof become smaller, the peak position moves to the outer side than the core center position. On this account, the configuration shown in Figs. 15A and 15B, the field distribution mismatching of the propagation light is generated in each of the joined parts of the linear waveguide parts A, C and E to the curved waveguide parts B and D. Then, the field distribution mismatching of the propagation light increases an insertion loss of the propagation light.

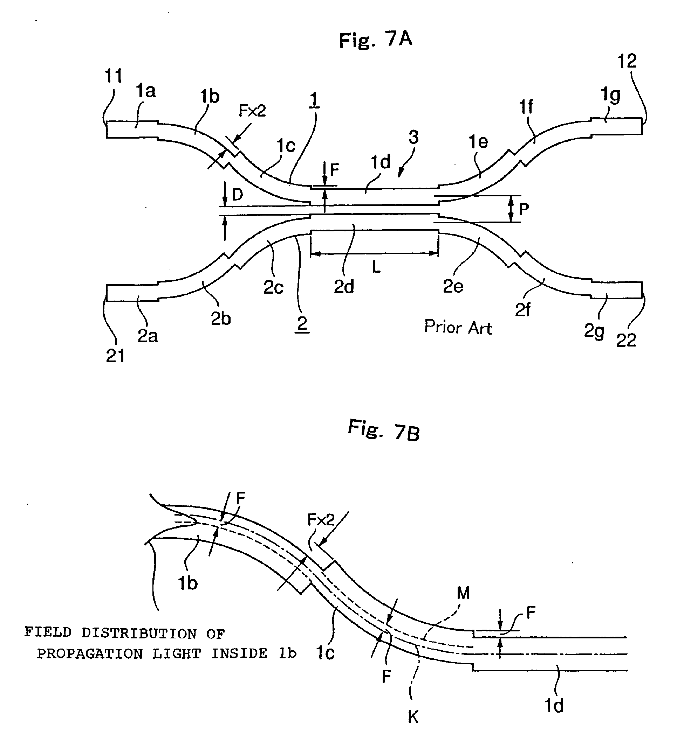

Hence, in the optical waveguide type directional coupler, in order to decrease the insertion loss, Japanese Patent No. 2804363 proposed an optical waveguide type directional coupler having a configuration shown in Fig. 7A. This optical waveguide type directional coupler has linear waveguide parts 1a, 1d, 1g, 2a, 2d and 2g and curved waveguide parts 1b, 1c, 1e, 1f, 2b, 2c, 2e and 2f sandwiched by these linear waveguide parts 1a, 1d, 1g, 2a, 2d and 2g.

In the optical waveguide type directional coupler of this proposal, an optical coupling part 3 are formed of two linear waveguide parts 1d and 2d closely disposed where these linear waveguide parts 1d and 2d are formed in parallel each other. In each of the joined parts of the linear waveguide part 1d to the curved waveguide parts 1c and 1e and the joined parts of the linear waveguide part 2d to the curved waveguide parts 2c and 2e, an offset F (0.45 µm, for example) is provided.

Additionally, in each of the joined parts of the curved waveguide part 1c to the curved waveguide part 1b, the curved waveguide part 1e to the curved waveguide part 1f, the curved waveguide part 2c to the curved waveguide part 2b and the curved waveguide part 2e to the curved waveguide part 2f, an offset 2F (0.90 µm, for example) is formed.

Furthermore, in each of the joined parts of the curved waveguide part 1b to the linear waveguide part 1a, the curved waveguide part 1f to the linear waveguide part 1g, the curved waveguide part 2b to the linear waveguide part 2a and the curved waveguide part 2f to the linear waveguide part 2g, the offset F (0.45 µm, for example) is formed.

Each of the offsets (F or 2F) is disposed to match the peak positions in the field distribution of the propagation light in the joined parts of the linear waveguide parts 1a, 1d, 1g, 2a, 2d and 2g and to the curved waveguide parts 1b, 1c, 1e, 1f, 2b, 2c, 2e and 2f and the curved waveguide parts 1b, 1c, 1e, 1f, 2b, 2c, 2e and 2f thereto.

That is, as shown in Fig.7B, for example, in the first optical waveguide 1, the peak position in the field distribution of the curved waveguide parts 1b and 1c is at the position indicated by a curve K in the drawing. The position of this curve K shifts from the core center positions of the curved waveguide parts 1b and 1c (they are curves M in the drawing and are to be the center position of the optical waveguides) to outside (that is, to the opposite side each other) by the offsets F. On this account, by providing the offset 2F in the joined part of the curved waveguide parts 1b and 1c, matching the peak positions in the field distribution of the propagation light can be intended.

Additionally, since the peak position in the field distribution of the linear waveguide part 1d matches to the core center position thereof, the offset F is provided in the joined part of the linear waveguide part 1d to the curved waveguide part 1c and thereby matching the peak positions in the field distribution of the propagation light can be intended.

Therefore, the offsets are similarly formed in the joined parts of the linear waveguide parts 1a, 1d, 1g, 2a, 2d and 2g to the curved waveguide parts 1b, 1c, 1e, 1f, 2b, 2c, 2e and 2f and the joined parts of the curved waveguide parts 1b, 1c, 1e, 1f, 2b, 2c, 2e and 2f thereto and thereby matching the peak positions in the field distribution of the propagation light can be intended. Thus, the insertion loss of the optical waveguide type directional coupler can be reduced.

The optical waveguide type directional coupler shown in Figs. 7A and 7B is formed by using a well-known flame hydrolysis deposition method (FHD method) where a cladding is disposed around a core that forms each of the optical waveguides to form a buried optical waveguide structure, for example. Additionally, the cladding is formed of a silica-based glass so that the relative refractive index difference between the core and the cladding covering the core becomes 0.4% and the core is formed of a silica-based glass doped with TiO₂. The core is formed to have a width of 9.0 µm and a height of 8.5 µm. Furthermore, the radius of curvature of the entire curved waveguides is formed to be 18000 µm.

A distance P between the core centers of the linear waveguide parts 1d and 2d is set to be 12.5 µm on a photomask used in the photolithography process and a length L of the optical coupling part 3 is set to be 280 µm. This length has been set where the coupling efficiency to a light having a 1.55 µm wavelength becomes 50%.

Additionally, the coupling efficiency is a ratio of a light propagating from one side of first and second optical waveguide 1 and 2 to the other side thereof through the optical coupling part 3. For example, in Fig. 7A, it is called a propagation ratio of a light entered from an incident side 11 of the first optical waveguide 1 and emitted from an outgoing side 22 of the second optical waveguide 2, or a propagation ratio of a light entered from an incident side 21 of the second optical waveguide 2 and emitted from an outgoing side 12 of the first optical waveguide 1.

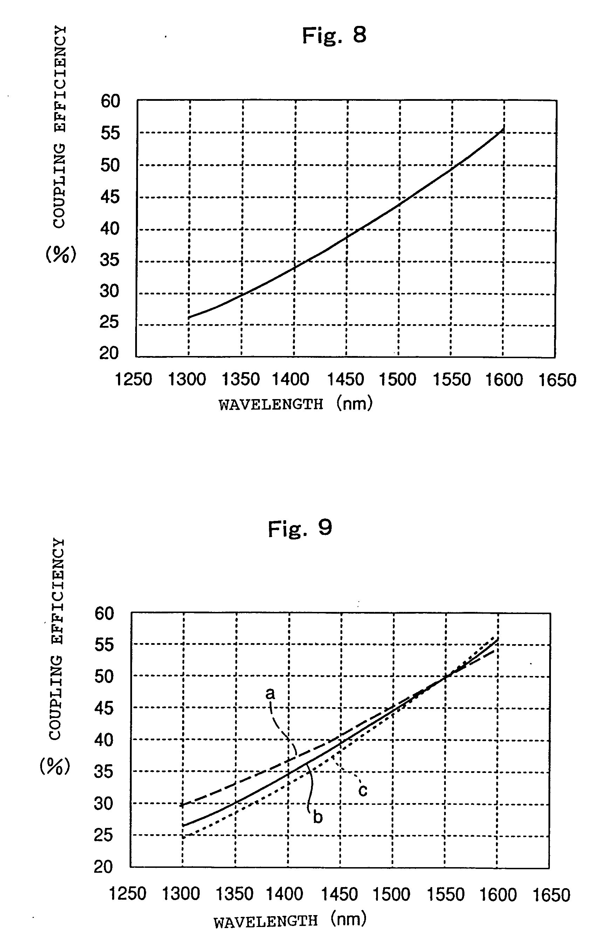

Now, in the optical waveguide type directional coupler as described above, a wavelength dependency or a polarization dependency of the coupling efficiency is desired to be small. However, the optical waveguide type directional coupler as shown in Fig. 7A has a wavelength dependency as shown in Fig. 8. For example, the coupling efficiency in the 1.55 µm wavelength is 50%, whereas the coupling efficiency in a 1.31 µm wavelength is 27%; the difference is as large as 23%.

The wavelength dependency of the optical waveguide type directional coupler is known to change by a distance between the peaks in the field distribution of a propagation light in the optical coupling part 3. The optical coupling part 3 in the optical waveguide type directional coupler shown in Fig. 7A is formed of the linear waveguide parts 1d and 2d and the distance between the peaks in the field distribution of the propagation light matches to a distance P between the core centers of the linear waveguide parts 1d and 2d.

Thus, an inventor of the invention thought that the distance P between the core centers of two linear waveguide parts forming an optical coupling part is set to a proper value in the configuration of the optical waveguide type directional coupler shown in Fig. 7A and thereby the wavelength dependency of the coupling efficiency set forth can be reduced. In order to verify this, first, a distance P between the centers of the linear waveguide parts on a photomask used when fabricating the optical waveguide type directional coupler was set 12.0, 12.5 and 13.0 µm, for example, three kinds of optical waveguide type directional couplers where the coupling efficiency to the light having the 1.55 µm wavelength had been set 50% were produced and wavelength dependencies of the coupling efficiency thereof were determined.

As a result, the wavelength dependencies of the coupling efficiency of the optical waveguide type directional couplers are demonstrated as illustrated in Fig. 9. In the drawing, a curve a is one having the distance P between the centers being 12.0 µm, a curve b is one having the distance P between the centers being 12.5 µm and a curve c is one having the distance P between the centers being 13.0 µm. It was found that one having a smaller distance P between the core centers of the linear waveguide parts could reduce the wavelength dependency of the coupling efficiency.

Additionally, in order to determine the polarization dependency of the coupling efficiency of the optical waveguide type directional coupler shown in Fig. 7A, the inventor measured each of the coupling efficiency of the proposed optical waveguide type directional coupler in a TE mode and a TM mode using a light source having the 1.55 µm wavelength. As a result, the coupling efficiency in the TE mode was 46.7% and that in the TM mode was 53.0%; the difference was as large as 6.3%.

Thus, in order to seek a configuration that can reduce the polarization dependency, a polarization dependency of the coupling efficiency was determined on each of the three kinds of optical waveguide type directional couplers. Consequently, one having the distance P equal to 12.0 µm had 3.8% of the coupling efficiency difference between the TE mode and the TM mode, one having the distance P equal to 12.5 µm had 4.1% of the coupling efficiency difference between the TE mode and the TM mode and one having the distance P equal to 13.0 µm had 6.3% of the coupling efficiency difference between the TE mode and the TM mode.

According to the experimental result described above, it was found that one having a smaller distance P between the core centers of the linear waveguide parts could reduce both the polarization dependency and the wavelength dependency of the coupling efficiency.

However, when the distance P between the core centers of the linear waveguide parts is made smaller, a distance D between the linear waveguide parts is also made smaller with this. Still, taking it into account that constraints of the photolithography process when fabricating the optical waveguide or an amount dW of a decrease in an optical waveguide width in the etching process, it is needed to set a stable distance or above in the processes such that a distance (D + dW) between the linear waveguide parts 1d and 2d on the photomask is 2 µm or above, for example. That is, when the distance (D + dw) between the linear waveguide parts 1d and 2d on the photomask becomes smaller than 2 µm, the waveguide fabrication cannot be conducted stably.

When such things are considered, the distance P between the core centers of the linear waveguide parts 1d and 2d could not be a sufficiently small value that can reduce the wavelength dependency and the polarization dependency of the coupling efficiency. Thus, the wavelength dependency and thus the polarization dependency of the coupling efficiency could not be decreased sufficiently.

Additionally, when the distance P between the core centers of the linear waveguide parts 1d and 2d is made smaller, the distance D between the linear waveguide parts 1d and 2d has to be made smaller to a great extent with this. Therefore, there might be a concern that the fabrication of the optical waveguide type directional coupler becomes difficult, fabricating errors become greater and variations in the optical coupling efficiency become greater.

That is, since the orthodox optical waveguide type directional coupler is formed in which the linear waveguide parts 1d and 2d are arranged side by side in parallel at a narrow distance over a length of 100 µm in the optical coupling part 3, variations are generated in the width or an etching depth of the linear waveguide parts 1d and 2d and in an amount of the core deformed when an over cladding is formed on the cores that form the linear waveguide parts 1d and 2d.

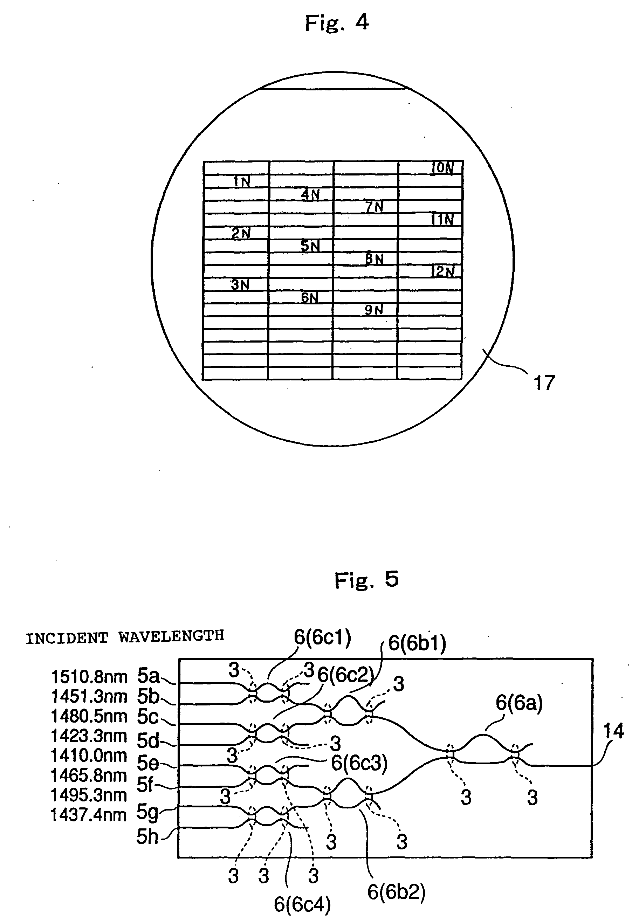

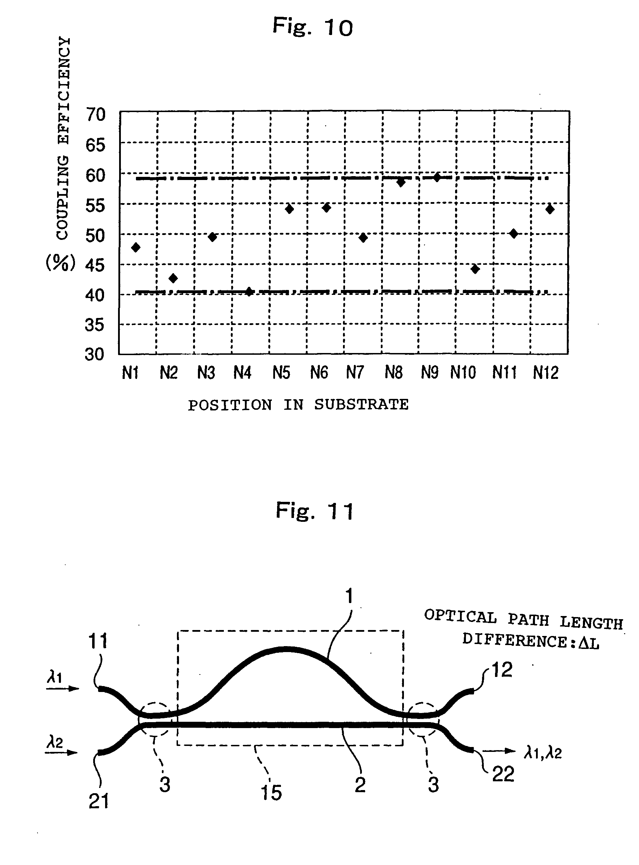

For example, as shown in Fig. 4, the inventor disposed a plurality (68 couplers in the same drawing) of the type shown in Fig. 7A of optical waveguide type directional couplers on a four-inch substrate 17 for fabrication to determine variations in the coupling efficiency of the light having the 1.55 µm wavelength on each of the optical waveguide type directional couplers at 12 positions (1N to 12N). The result is demonstrated as in shown Fig. 10. As illustrated in Fig. 10, it was found that the coupling efficiency of the light having the 1.55 µm wavelength of the optical waveguide type directional couplers varies as large as plus or minus 10%.

Furthermore, the coupling efficiency of the optical waveguide type directional couplers as set forth affects an insertion loss of an optical waveguide circuit formed by using the optical waveguide type directional couplers. Thus, a problem arises such that an insertion loss of a Mach-Zehnder interferometer type optical waveguide circuit shown in Fig. 11 varies according to variations in the coupling efficiency of the optical waveguide type directional couplers. Moreover, the Mach-Zehnder interferometer type optical waveguide circuit is an optical waveguide circuit formed by serially connecting two optical waveguide type directional couplers where first and second optical waveguides 1 and 2 have a length different from each other (they have an optical path length difference 15), the first and second optical waveguides 1 and 2 are sandwiched by optical coupling parts 3 of the two optical waveguide type directional couplers.

This type of Mach-Zehnder interferometer type optical waveguide circuit, when it is used as an optical multiplexer or an optical demultiplexer, as disclosed in Japanese Patent No. 2557966, is known to reduce an insertion loss by setting the coupling efficiency of each of the optical coupling parts 3 50% with respect to the wavelength entered from the incident side 11 of the first optical waveguide 1 which is a port on the cross side in the case that wavelengths λ₁ and λ₂ are entered from the incident side 11 of the first optical waveguide 1 and the incident side 21 of the second optical waveguide 2, respectively, and a multiplexed light of the wavelengths λ₁ into λ₂ is emitted from the outgoing side 22 of the second optical waveguide 2, as shown in Fig. 7A. However, when the coupling efficiency of the optical waveguide type directional couplers varies as set forth, a problem arises that the insertion loss of the Mach-Zehnder interferometer type optical waveguide circuit is increased.

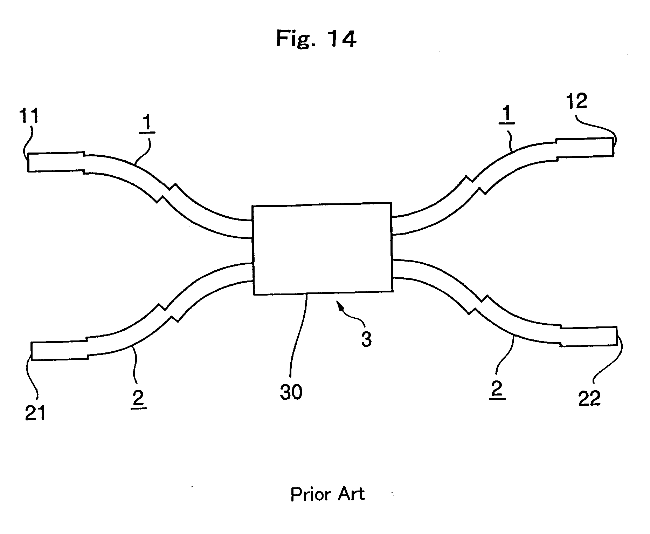

Additionally, in the optical waveguide type directional coupler, in order to reduce the wavelength dependency and the polarized wave dependency of the coupling efficiency, as shown in Fig. 14, a coupler is proposed in which a optical coupling part 3 is formed of a multimode waveguide 30 not forming it of the first and second optical waveguides 1 and 2, instead of reducing the distance between the first and second optical waveguides 1 and 2. However, this proposed optical waveguide type directional coupler has a defect that only a slight shift in the width of the multimode waveguide 30 caused by variations in fabrication increase losses. Therefore, it is difficult to apply a type shown in Fig. 14 of optical waveguide type directional coupler to a purpose that demands low losses in particular.

In one aspect of the invention, the invention is to provide an optical waveguide type directional coupler capable of reducing the wavelength dependency and the polarization dependency of the coupling efficiency and to provide an optical waveguide circuit with a small insertion loss by forming the optical waveguide circuit using this optical waveguide type directional coupler.

In an optical waveguide type directional coupler of one viewpoint of the invention, for example, at least one of a first optical waveguide and a second optical waveguide in an optical coupling part is formed to be a curved optical waveguide that projects to the other side thereof. By this, a distance between peaks in a field distribution of a propagation light propagating from one side of the first and second optical waveguides to the other side thereof through the optical coupling part can be made narrower than a distance between core centers of the first and second optical waveguides.

That is, as described above, in a curved waveguide, a peak position in the field distribution of the propagation light is shifted to the outer side than a core center position. Therefore, in the case that at least one of the first optical waveguide and the second optical waveguide in the optical coupling part is formed to be a curved optical waveguide projecting to the other optical waveguide side, as one example, the distance between the peaks of the field distribution of the propagation light propagating from one side of the first and second optical waveguides to the other side thereof is smaller as compared with the case that both the first and second optical waveguides in the optical coupling part are formed of linear waveguid parts.

Thus, in this manner, when the distance between the peaks of the field distribution of the propagation light propagating from one side of the first and second optical waveguides to the other side thereof is made smaller in the optical coupling part, as apparent from the study results according to the inventor, the wavelength dependency and the polarization dependency of the coupling efficiency in the optical waveguide type directional coupler can be reduced.

Additionally, for example, at least one of the first optical waveguide and the second optical waveguide forming the optical coupling part is formed to be the curved optical waveguide that projects to the other optical waveguide side. Thereby, the optical waveguide configuration can be fabricated easily and variations in fabrication can also be reduced as compared with the case of the orthodox example in which both the first and second optical waveguides in the optical coupling part are formed of the linear waveguide parts and the linear waveguide parts are arranged side by side in parallel at the length thereof. Consequently, variations in the coupling efficiency can be reduced.

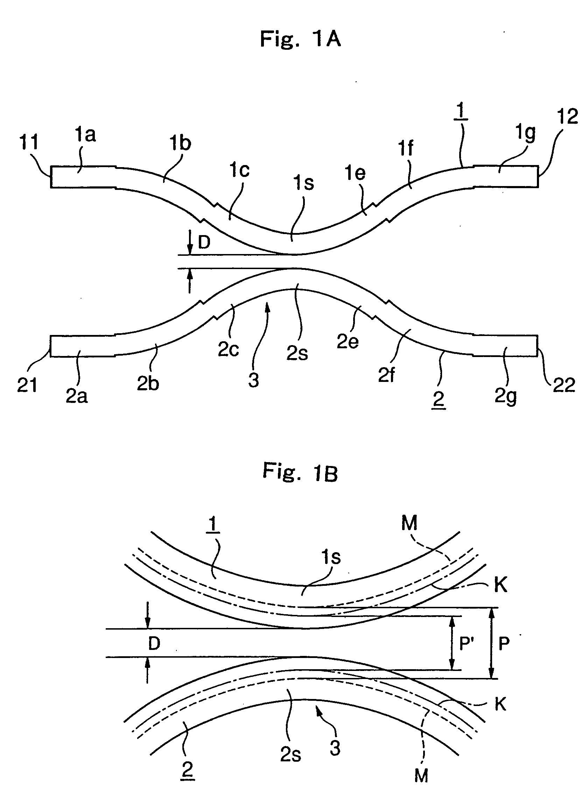

Fig. 1A depicts one embodiment of the optical waveguide type directional coupler according to the invention. Fig. 1B depicts an enlarged view near an optical coupling part 3 in the optical waveguide type directional coupler of the embodiment.

The embodiment shown in Fig. 1A differs from that shown in Fig. 7A in the configuration of the area of the optical coupling part 3. It is similarly configured to that shown in Fig. 7A, except that. In the embodiment of the invention shown in Fig. 1A, both a first optical waveguide 1 and a second optical waveguide 2 in an optical coupling part 3a are formed to be curved optical waveguides (curved waveguide parts) 1S and 2S that project to the other optical waveguide side.

According to this configuration, as shown in Fig. 1B, a distance between peaks (chain lines K) in a field distribution of a propagation light propagating from one side of the first and second optical waveguides 1 and 2 to the other side thereof is made narrower than a distance between core centers (dashed lines M) of the first and second optical waveguides 1 and 2, which is indicated by the dashed lines in Fig. 1B. Here, the shortest distance between the peaks in the field distribution of the propagation light is set P' and the shortest distance between the core centers is set P where P' ≅ P - 0.9 µm.

Additionally, in the embodiment shown in Fig. 1A, no offset is provided between a curved waveguide part 1c and a curved waveguide part 1S and between the curved waveguide part 1S and a curved waveguide part 1e; the curved waveguide parts 1c, 1S and 1e are substantially formed to be one curved waveguide. Furthermore, no offset is similarly provided between a curved waveguide part 2c and a curved waveguide part 2S and between the curved waveguide part 2S and a curved waveguide part 2e; the curved waveguide parts 2c, 2S and 2e are substantially formed to be one curved waveguide.

A bending radius of the curved waveguide parts 1 and 2S in the optical coupling part 3 is formed to have a value in a radiation mode suppressing range capable of suppressing the radiation mode of the entire wavelength lights that propagate through the curved optical waveguide parts 1S and 2S. In this example, it is formed to be 18000 µm. Besides, in this embodiment, as described above, the curved waveguide parts 1c, 1S and 1e are substantially formed to be one curved waveguide and the curved waveguide parts 2c, 2S and 2e are substantially formed to be one curved waveguide and thus both the bending radii of these curved waveguides are formed to be 18000 µm.

Additionally, the optical waveguide type directional coupler of the embodiment shown in Fig. 1A was also fabricated by the FHD method the same as the orthodox example shown in Fig. 7A. A cladding was formed of a SiO₂-B₂O₃-P₂O₅-based glass and a core was further added with TiO₂ to have the relative index difference of 0.4%.

A core width was 9.0 µm, a core height was 8.5 µm and the coupler was formed to be a single-mode waveguide in a band having wavelengths from 1.4 to 1.6 µm. Furthermore, the shortest distance P between the core centers of the first and second optical waveguides 1 and 2 in the optical coupling part 3 was designed to be 12.5 µm so as to have 50% of the coupling efficiency with respect to the light having the 1.55 µm wavelength. The optical waveguide type directional coupler was fabricated by using a photomask having this design value.

Moreover, in the production of the photomask for use in fabricating the optical waveguide type directional coupler, the waveguide width was designed to be 1 µm wider and the minimum distance between two waveguies on the photomask was set 2.5 µm, allowing an amount of a decrease in the waveguide width due to the etching process.

Besides, in a process where an over cladding is disposed on the upper side of the core to form a buried waveguide, because of the deformation of a core pattern, an actual shortest distance P between the core centers of the first and second optical waveguides 1 and 2 in the optical coupling part 3 was 10.7 µm and a shortest distance D between of the first and second optical waveguides 1 and 2 was 1.7 µm.

Also, the distance between the peaks (the chain lines K) in the field distribution of the propagation light propagating from one side of the first and second optical waveguides 1 and 2 to the other side thereof through the optical waveguide 3 became 0.9 µm narrower than that between the core centers (the dashed lines M) of the first and second optical waveguides 1 and 2 in the optical waveguide 3, which are indicated by the dashed lines in Fig. 1B. At this time, the relationship between the shortest distance P' between the peaks in the field distribution of the propagation light and the shortest distance P between the core centers is P' ≅ P - 0.9 µm and thus the shortest distance P' between the peaks in the field distribution of the propagation light is 9.8 µm.

The embodiment of the invention is configured in this manner where both the first and second optical waveguides 1 and 2 in the optical coupling part 3 are formed to be the curved optical waveguide parts 1S and 2S that project to the other optical waveguide side and the distance between the peaks in the field distribution of the propagation light propagating from one side of the first and second optical waveguides 1 and 2 to the other side thereof through the optical waveguide 3 is narrower than that between the core centers of the first and second optical waveguides 1 and 2 in the optical waveguide 3. On this account, as apparent from the study results done by the inventor, the wavelength dependency and the polarization dependency of the coupling efficiency in the optical waveguide type directional coupler can be reduced.

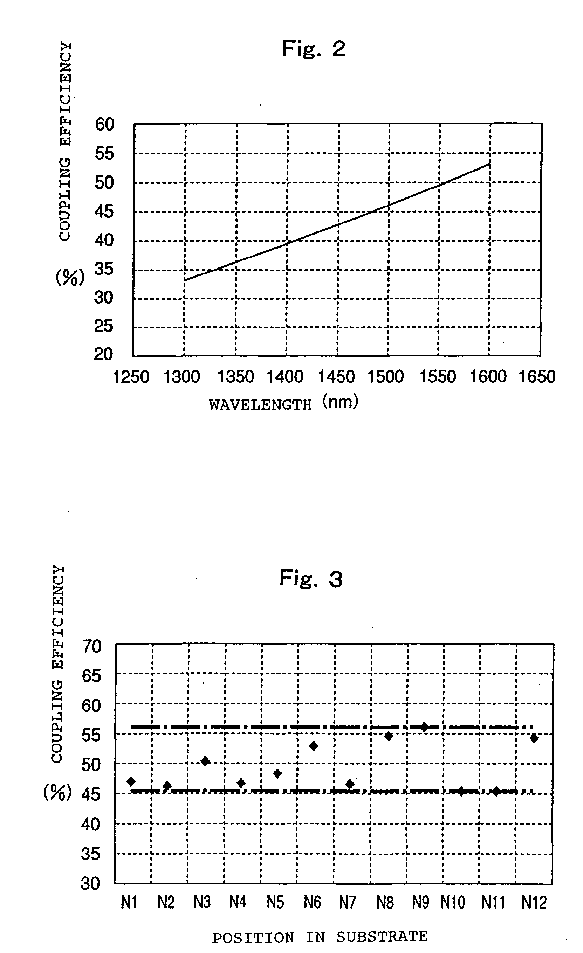

In fact, when the wavelength dependency of the coupling efficiency was determined on the optical waveguide type directional coupler of the embodiment, a result shown in Fig. 2 was obtained. As shown in the drawing, the difference between the coupling efficiency in the 1.55 µm wavelength and the coupling efficiency in the 1.3 µm wavelength is 16%. According to this result, it was confirmed that the wavelength dependency of the coupling efficiency can be reduced as compared with the optical waveguide type directional coupler of the orthodox example shown in Fig. 7A which was fabricated with a 12.5 µm distance between the core centers.

Additionally, when the polarized wave dependency of the coupling efficiency was determined on the optical waveguide type directional coupler, the coupling efficiencies in the TE mode and the TM mode in the 1.55 µm wavelength were 48.0% and 52.0%, respectively; the difference was 4.0%. It was confirmed that the optical waveguide type directional coupler of the embodiment has the difference in the coupling efficiency due to the difference between the polarization modes smaller than the difference (6.3%) between the TE mode and the TM mode of the orthodox example shown in Fig. 7A.

Furthermore, according to the embodiment of the invention, both the first optical waveguide 1 and the second optical waveguide 2 in the optical coupling part 3 are formed to be the curved optical waveguide parts 1S and 2S that project to the other optical waveguide side. On this account, the area where an interval between the first and second optical waveguides 1 and 2 is narrow is small largely. Thus, the fabrication of the optical waveguide configuration can be conducted easily and variations in fabrication can also be reduced, as compared with the case of the orthodox example in which both the first and second optical waveguides in the optical coupling part are formed of the linear waveguides and the linear waveguides are arranged side by side in parallel at the length thereof. Therefore, according to the embodiment, variations in the coupling efficiency due to the variations in fabrication can be decreased as well.

In fact, as shown in Fig. 4, when a plurality (68 couplers in the drawing) of optical waveguide type directional couplers of the embodiment were disposed on a four-inch substrate 17 for fabrication and variations in the coupling efficiency due to disposed positions (1N to 12N) were determined, they were demonstrated as illustrated in Fig. 3; the variations in the coupling efficiency were approximately plus or minus 5%. This value is smaller than that of the variations (about plus or minus 10%) in the coupling efficiency in the case that the optical waveguide type directional couplers of the orthodox example shown in Fig. 7A were similarly fabricated with a 12.5 µm distance between the core centers. According to this, it was confirmed that the embodiment could also reduce the variations in the coupling efficiency of the optical waveguide type directional coupler.

Moreover, according to the embodiment of the invention, as apparent from the comparison of Fig. 1A with Fig. 7A, the optical waveguide type directional coupler of the embodiment is substantially to have such a configuration that the linear waveguide parts 1d and 2d in the orthodox example show in Fig. 7A are omitted. Therefore, downsizing the optical waveguide type directional coupler can be intended with the omission of the linear waveguide parts. As compared with the orthodox example, the length in the longitudinal direction could be shortened by about 250 µm.

Besides, in the embodiment as set forth, in the case that the minimum bending radius of the curved waveguide parts in the optical coupling part is to be a value within the radius range capable of suppressing the entire wavelength lights propagating through the curved waveguide parts, for example, the radiation mode of the entire wavelength lights propagating through the curved waveguide part can be suppressed. Thus, an increase in losses due to the radiation mode of the light can be suppressed.

Additionally, in the embodiment described above, in the case that the minimum bending radius of the curved waveguide parts in the optical coupling part is to be the minimum value in the radiation mode suppressing range, for example, reducing the bending radius of the curved waveguide can downsize the size of the optical waveguide type directional coupler, in addition to the effect of suppressing an increase in the losses due to the radiation mode of the light.

Next, one embodiment of the optical waveguide circuit according to the invention will be described. This optical waveguide circuit is formed by using the optical waveguide type directional coupler of the embodiment set forth as one example thereof. As shown in Fig. 5, the optical waveguide circuit was formed by connecting Mach-Zehnder interferometer type optical waveguide circuits 6 in a plurality of stages, the Mach-Zehnder interferometer type optical waveguide circuit functions as an optical multiplexer.

Specifically, the optical waveguide circuit of the embodiment has a plurality (here, the number is four) of Mach-Zehnder interferometer type optical waveguide circuits 6 (6c1 to 6c4) arranged side by side in a first stage on the light incident ports 5a to 5h side. The Mach-Zehnder interferometer type optical waveguide circuits 6 (6b1 and 6b2) in a second stage are connected thereto for further optically multiplexing a light output of every pair of the Mach-Zehnder interferometer type optical waveguide circuits 6 among these Mach-Zehnder interferometer type optical waveguide circuits 6. In this manner, as the light outputs of the pairs of the Mach-Zehnder interferometer type optical waveguide circuits 6 in the previous stage (in this case, 6c1 to 6c4) are further optically multiplexed by the Mach-Zehnder interferometer type optical waveguide circuits 6 in the subsequent stage (in this case, 6b1 and 6b2), the Mach-Zehnder interferometer type optical waveguide circuits 6 (6a to 6c4) are connected in multiple stages (three stages here) to form the optical waveguide circuit.

In this embodiment, each of the Mach-Zehnder interferometer type optical waveguide circuits 6 is formed in which two optical waveguide type directional couplers having the configuration shown in Fig. 1A are serially connected and the lengths of the optical waveguides 1 and 2 sandwiched by the optical coupling parts 3 of the optical waveguide type directional coupler are formed to differ from each other. Additionally, in the optical waveguide circuit of the embodiment, the shortest distance P between the core center positions of the first and second optical waveguides 1 and 2 in the optical coupling part 3 was designed to be 12.5 µm.

Furthermore, an optical wavelength that is inputted from the incident side of the first optical waveguide 1 forming each of the Mach-Zehnder interferometer type optical waveguide circuits 6 and is outputted from the outgoing side of the second optical waveguide 2, or an optical wavelength that is inputted from the incident side of the second optical waveguide 2 and is outputted from the outgoing side of the first optical waveguide 1 is defined as a cross propagation wavelength. An optical wavelength that is inputted from the incident side of the first optical waveguide 1 and is outputted from the outgoing side of the first optical waveguide 1, or an optical wavelength that is inputted from the incident side of the second optical waveguide 2 and is outputted from the outgoing side of the second optical waveguide 2 is defined as a through propagation wavelength. In this case, each of the Mach-Zehnder interferometer type optical waveguide circuits 6 applied to the embodiment is configured as one example as follows.

That is, in each of the Mach-Zehnder interferometer type optical waveguide circuits 6, the product (n · ΔL) of a difference (an optical path length difference of the Mach-Zehnder interferometer type optical waveguide circuit) ΔL between the lengths of the first optical waveguide 1 and the second optical waveguide 2 sandwiched by two optical coupling parts 3 and a refractive index n of the first and second optical waveguides 1 and 2 forms integral multiples of the cross propagation wavelength and (an integer plus or minus 0.5) times the through propagation wavelength.

Moreover, in the entire Mach-Zehnder interferometer type optical waveguide circuits 6c1 to 6c4 in the first stage, the coupling efficiency of the cross propagation wavelength (an optical wavelength entered into incident ports 5a, 5d, 5e and 5h on the side crossing to an optically multiplexed light output part in each of the Mach-Zehnder interferometer type optical waveguide circuits 6) is set 50%. In the Mach-Zehnder interferometer type optical waveguide circuits 6b1, 6b2 and 6a after the second stage, the cross propagation wavelength becomes two kinds or above and the coupling efficiency of the optical waveguide type directional coupler cannot be set 50% with respect to the entire wavelengths. Thus, the coupling efficiency was set 50% in a wavelength having an average value of the cross propagation wavelength.

The optical path length difference and the coupling efficiency in each of the Mach-Zehnder interferometer type optical waveguide circuits 6 are set as described above. Thereby, in each wavelength in each of the Mach-Zehnder interferometer type optical waveguide circuits 6, the optical wavelengths entered from the respective incident sides of the first and second optical waveguides 1 and 2 are multiplexed with low losses to output the multiplexed light from the outgoing side thereof and the respective multiplexed lights entered from each of the incident ports 5a to 5h can be outputted from a light output end 14 in a state in which the insertion loss of each of the wavelengths is nearly equal.

The embodiment of the optical waveguide circuit is configured as set forth. The optical waveguide circuit of the embodiment was formed by serially connecting two optical waveguide type directional couplers having the configuration shown in Fig. 1A to form the Mach-Zehnder interferometer type optical waveguide circuit 6 and connecting the plurality of them in the multiple stages. Thus, variations in the coupling efficiency of each of the optical coupling parts 3 of the Mach-Zehnder interferometer type optical waveguide circuits 6 can be made smaller and thereby the insertion loss of the optical waveguide circuit can be reduced.

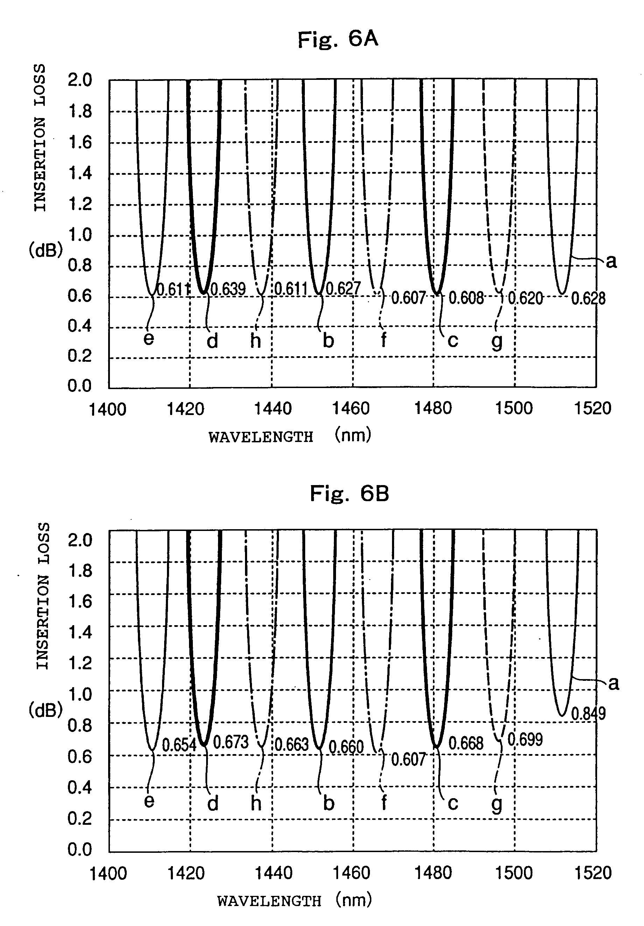

Actually, in the optical waveguide circuit of the embodiment, the insertion loss of the light outputted from the light output end 14 was simulated. The result is demonstrated as shown in Fig. 6A; the maximum insertion loss value was approximately 0.64 dB and the difference (variations among the respective ports) in the insertion loss due to the difference in the incident ports 5a, 5d, 5e and 5h was approximately 0.03 dB. In Fig. 6A, as the insertion loss characteristic of the light entered from the incident port 5a is indicated by a characteristic line a in the drawing, the insertion loss characteristic of the light entered from the incident port 5b is indicated by a characteristic line b in the drawing and so on, the insertion loss characteristic of the light entered from each of the incident ports 5a to 5h is indicated by characteristic lines a to h. In the drawings used in the following description, the relationship between the incident ports 5a to 5h and the characteristic lines a to h is the same.

Additionally, in the embodiment, the insertion loss of the light outputted from the light output end 14 was simulated when the coupling efficiency of each of the optical coupling parts 3 of the Mach-Zehnder interferometer type optical waveguide circuits 6 was shifted 5% from the design value. The result is demonstrated as shown in Fig. 6B; the maximum insertion loss value is approximately 0.85 dB and the difference in the insertion loss due to the difference in the incident ports 5a to 5h was approximately 0.24 dB.

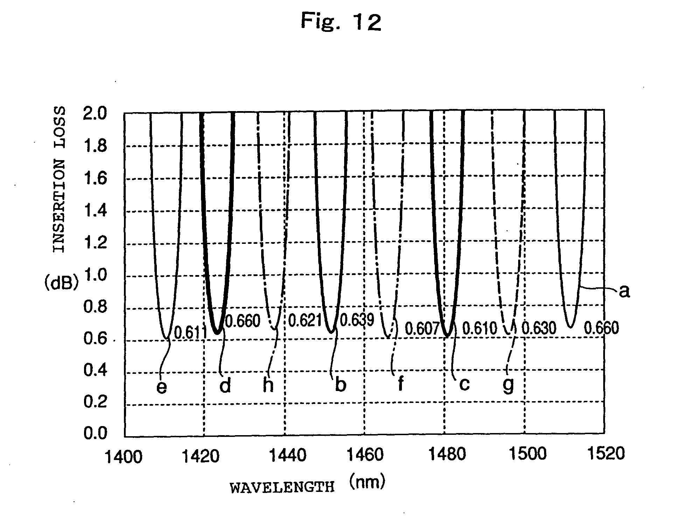

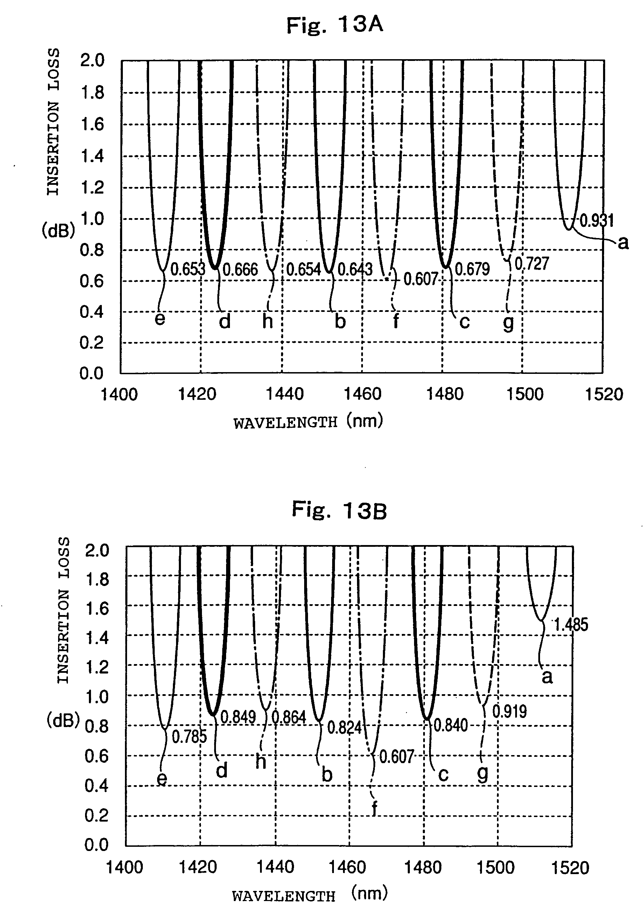

Furthermore, in the case that the Mach-Zehnder interferometer type optical waveguide circuit 6 was formed by using the optical waveguide type directional couplers of the orthodox example shown in Fig. 7A and the Mach-Zehnder interferometer type optical waveguide circuits 6 were connected in the multiple stages the same as the embodiment for forming the comparison example, it is assumed that the coupling efficiency of the optical waveguide type directional couplers forming each of the Mach-Zehnder interferometer type optical waveguide circuits 6 was fabricated in conformity with design in the orthodox type of optical waveguide circuit. The insertion loss spectrum thereof is demonstrated as shown in Fig. 12. Moreover, in this comparison example, the spectra in the case that the coupling efficiency of the optical waveguide type directional coupler becomes 5% higher than the design value and the case that it becomes 10% higher are demonstrated in Figs. 13A and 13B, respectively.

From these drawings, in the optical waveguide circuit of the comparison example (the optical waveguide circuit using the optical waveguide type directional couplers of the orthodox example), even if the circuit was fabricated in conformity with design, the maximum insertion loss value is approximately 0.66 dB and the difference in the insertion loss due to the difference in the incident ports 5a to 5h is approximately 0.05 dB. Besides, the maximum insertion loss value is approximately 0.93dB when the coupling efficiency of each of the optical coupling parts 3 of the Mach-Zehnder interferometer type optical waveguide circuits 6 was shifted 5 % from the design value and the difference in the insertion loss due to the difference in the incident ports 5a to 5h is 0.32 dB. When the coupling efficiency is shifted 10% from the design value, the maximum insertion loss value is approximately 1.48dB and the difference in the insertion loss due to the difference in the incident ports 5a to 5h is 0.87 dB, badly aggravated.

That is, as apparent from the comparison result, the embodiment of the invention forms the optical waveguide circuit by connecting the Mach-Zehnder interferometer type optical waveguide circuits 6 using the optical waveguide type directional couplers having the configuration shown in Fig. 1A. Thus, the wavelength dependency of each of the optical coupling parts 3 which the Mach-Zehnder interferometer type optical waveguide circuits 6 have is small. On this account, in the Mach-Zehnder interferometer type optical waveguide circuits 6b1, 6b2 and 6a after the second stage, even when the optical waveguide circuit is formed to have 50% of the coupling efficiency in the wavelength having an average value of the cross propagation wavelength, the difference in the insertion loss due to the difference in the incident ports 5a to 5h can be made small and the insertion loss can be made small entirely.

Additionally, according to the embodiment of the invention, the optical waveguide circuit is formed by connecting the Mach-Zehnder interferometer type optical waveguide circuits 6 using the optical waveguide type directional couplers having the configuration shown in Fig. 1A. Thus, the variations in the coupling efficiency of each of the optical coupling parts 3 which the Mach-Zehnder interferometer type optical waveguide circuits 6 have are small as well. On this account, the coupling efficiency is not shifted as large as 10% from the design value and the difference in the insertion loss due to the difference in the incident ports 5a to 5h and the entire insertion loss can be made small.

Furthermore, in the embodiment as set forth, for example, according to the optical waveguide type directional coupler in which the coupling efficiency of at least one wavelength light of the lights entered into the optical waveguide type directional coupler is set approximately 50%, for example, the insertion loss of the Mach-Zehnder interferometer type optical waveguide circuit using this optical waveguide type directional coupler can be made small.

Moreover, in the embodiment of the optical waveguide circuit as set forth, for example, in the case that the product (n·ΔL) of the difference ΔL between the lengths of the first optical waveguide and the second optical waveguide sandwiched by two optical coupling parts and the refractive index n of the first and second optical waveguides forms integral multiples of the cross propagation wavelength and (an integer plus or minus 0.5) times the through propagation wavelength, the Mach-Zehnder interferometer type optical waveguide circuit properly multiplexes and demultiplexes the cross propagation wavelength and the through propagation wavelength and it makes an excellent optical waveguide circuit with a further smaller insertion loss.

Additionally, the invention is not limited to the embodiments as set forth and it can adopt a variety of embodiments. For example, in the optical waveguide circuit of the embodiment, the plurality of Mach-Zehnder interferometer type optical waveguide circuits 6 were connected in the multiple stages, these Mach-Zehnder interferometer type optical waveguide circuits 6 were used as an optical multiplexer and thereby the optical waveguide circuit for multiplexing a plurality (eight kinds in Fig. 5) of wavelength lights different from each other was formed. However, each of the Mach-Zehnder interferometer type optical waveguide circuits 6 may be operated in the opposite direction to be an optical demultiplexer for demultiplexing a plurality (eight kinds in the case of Fig. 5) of wavelength lights different from each other. This case can also exert the same effect as the embodiment as set forth.

Additionally, the optical waveguide circuit of the invention is not limited to the configuration in which the plurality of Mach-Zehnder interferometer type optical waveguide circuits 6 are connected, as shown on Fig. 5. It may have one Mach-Zehnder interferometer type optical waveguide circuit 6. The optical waveguide type directional coupler is used for forming a variety of optical waveguide circuits such as a coupling-and-branching circuit where the optical waveguide type directional coupler is combined with a Y-branch waveguide or an optical switch using the optical waveguide type directional coupler.

Furthermore, configuration parameters of the optical waveguide type directional coupler are not limited in particular. They can be set arbitrarily. For example, in the case that a silica-based optical waveguide is used, the relative refractive index difference Δ of the core to the cladding is preferably set about 0.2 to 2.0%, the width and the height of the core are set 3.0 to 10.0 µm and the minimum bending radii of the curved optical waveguide parts 1S and 2S in the optical coupling part 3 are set about 1000 to 70000 µm of a value in the radiation mode suppressing range capable of suppressing the radiation mode of the entire wavelength lights that propagate through the optical waveguides.

Moreover, as apparent from the embodiment of the optical waveguide type directional coupler, in the configuration of one viewpoint of the invention, the optical waveguide configuration can be fabricated easily as compared with the case of the orthodox example in which the optical coupling part 3 is formed by bringing two linear waveguide parts close each other. Besides, the minimum distance between two optical waveguides forming the optical coupling part can be reduced and thus, as set forth, in the case that the silica-based optical waveguide is used, the relative refractive index difference of the core to the cladding can be made greater as well. In this manner, when a relative refractive index difference Δ of the core to the cladding is made greater, the bending radius of the curved waveguide part can be made smaller. Consequently, further downsizing the optical waveguide configuration can be intended.

Additionally, the value of the offset (the offsets F and 2F in Fig. 1A) disposed at the joined part of the linear waveguide parts or the joined part of the curved waveguide part to the linear waveguide part (see Fig. 7A for the positions of the offsets F and 2F) is to be set corresponding to the amount of peak positions shifted in the field distribution of the propagation light in the curved waveguide parts, which is arbitrarily set with design parameters such as the relative refractive index difference Δ of the core to the cladding, a refractive index profile, a bending radius of the curved waveguide part, a cross-sectional geometry such as a core width or a height and a wavelength of the propagation light. Furthermore, when general values of these design parameters are considered, the value of the amount of the offset may be set arbitrarily within a range of about 0.02 to about 1 µm.

Moreover, the minimum distance between the curved waveguide parts 1S and 2S forming the optical coupling part 3 is similarly set with the design parameters, as set forth. When general values of these design parameters are considered, the value of the minimum distance may be set arbitrarily in a range of about 7 to about 20 µm.

Additionally, in the embodiment as set forth, the core and the cladding were formed by the FHD method but a variety of other methods such as a vacuum deposition method, a plasma CVD method and a sol-gel process can be applied.

Furthermore, in the embodiment as set forth, the optical waveguide configuration was a buried waveguide but other optical waveguide configurations such as a ridge optical waveguide or a diffused optical waveguide can be applied.

Moreover, in the embodiment as set forth, the material for forming the optical waveguide was the silica-based material but a variety of materials such as a multi-component glass, a dielectric material, a compound semiconductor or a polymeric material can be applied.

Besides, in the embodiment as set forth, the optical coupling part 3 of the optical waveguide type directional coupler was formed to be the curved waveguide parts where both the first optical waveguide 1 and the second optical waveguide 2 project to the other optical waveguide side. However, at least one of the first optical waveguide 1 and the second optical waveguide 2 that form the optical coupling part 3 is preferably formed to be the curved waveguide part projecting to the other optical coupling part side.

Also, in the embodiment as set forth, the coupling efficiency of the optical coupling part 3 of the optical waveguide type directional coupler was set 50% with respect to the 1.55 µm wavelength or the cross propagation wavelength. However, the coupling efficiency of the optical coupling part 3 is not limited in particular and is to be set arbitrarily. Only, in the case that the optical waveguide circuit is to be the Mach-Zehnder interferometer type optical waveguide circuit which is used for the optical multiplexer or the optical demultiplexer, as set forth, the coupling efficiency to the cross propagation wavelength is preferably set nearly 50% because the insertion loss can be reduced by setting the coupling efficiency to the cross propagation wavelength approximately 50%.

## Claims

1. An optical waveguide type directional coupler comprising:
an optical coupling part comprising a first optical waveguide and a second optical waveguide arranged side by side to come close to each other at the middle part in a longitudinal direction of the optical waveguides;
at least one of an incident side of said first optical waveguide and an incident side of said second optical waveguide to be a light input part to said optical coupling part; and
at least one of an outgoing side of said first optical waveguide and an outgoing side of said second optical waveguide to be a light output part from said optical coupling part,
wherein in said optical coupling part, a distance between peaks in a field distribution of a propagation light propagating from one side of said first and second optical waveguides to the other side thereof is made narrower than that between core centers of said first and second optical waveguides in said optical coupling part.

2. An optical waveguide type directional coupler according to claim 1 wherein at least one optical waveguide of the first optical waveguide and the second optical waveguide in the optical coupling part has a curved optical waveguide that projects to the other optical waveguide side.

3. An optical waveguide type directional coupler according to claim 2 wherein a minimum bending radius of the curved optical waveguide in the optical coupling part is set to a value in a radius range capable of suppressing a radiation mode of the entire wavelength lights propagating through the curved optical waveguide.

4. An optical waveguide type directional coupler according to claim 3 wherein a minimum bending radius of the curved optical waveguide in the optical coupling part is set to a minimum value in said radius range.

5. An optical waveguide type directional coupler according to claim 1 wherein a coupling efficiency of a set wavelength light included in a wavelength band of a light entered into the optical waveguide type directional coupler is set approximately 50%.

6. An optical waveguide type directional coupler according to claim 2 wherein a coupling efficiency of a set wavelength light included in a wavelength band of a light entered into the optical waveguide type directional coupler is set approximately 50%.

7. An optical waveguide circuit comprising:
two optical waveguide type directional couplers connected serially, wherein:
a Mach-Zehnder interferometer type optical waveguide circuit is formed where lengths of first and second optical waveguides sandwiched by optical coupling parts of the two optical waveguide type directional couplers have a length different from each other, and at least one of the optical waveguide type directional couplers of the Mach-Zehnder interferometer type optical waveguide circuit is formed of the optical waveguide type directional coupler according to claim 1.

8. An optical waveguide circuit according to claim 7 wherein:
an optical wavelength that is inputted from an incident side of the first optical waveguide forming the Mach-Zehnder interferometer type optical waveguide circuit and is outputted from an outgoing side of the second optical waveguide, or an optical wavelength that is inputted from an incident side of said second optical waveguide and is outputted from an outgoing side of said first optical waveguide is defined as a cross propagation wavelength;
an optical wavelength that is inputted from the incident side of said first optical waveguide and is outputted from the outgoing side of the first optical waveguide, or an optical wavelength that is inputted from the incident side of said second optical waveguide and is outputted from the outgoing side of the second optical waveguide is defined as a through propagation wavelength; and
a product (n·ΔL) of a difference ΔL between the lengths of the first optical waveguide and the second optical waveguide sandwiched by two optical coupling parts and a refractive index n of said first and second optical waveguides forms integral multiples of the cross propagation wavelength and (an integer ± 0.5) times of the through propagation wavelength.

9. An optical waveguide circuit comprising a plurality of at least one of the optical waveguide circuits according to clams 8 and 7 connected.
